# EUROPEAN PATENT SPECIFICATION

(11) **EP 3 460 230 B1**
(45) Date of publication and mention of the grant of the patent: **21.10.2020**
(21) Application number: 18192254.3
(22) Date of filing: 03.09.2018
(51) Int. Cl.: F03D 3/06, F03D 3/02, F03D 3/00

(54) **WIND TURBINE**
WINDTURBINE
ÉOLIENNE

(30) Priority: 25.09.2017 IT 201700107075
(43) Date of publication of application: 27.03.2019
(73) Proprietor: Tommasi, Adeodato, 41043 Formigine (MO) (IT)
(72) Inventor: Tommasi, Adeodato, 41043 Formigine (MO) (IT)
(74) Representative: Corradini, Corrado

(56) References cited:
- WO-A1-85/03981
- WO-A1-2007/105985
- AU-A- 3 858 278
- US-A1- 2010 090 474
- US-A1- 2015 118 050
- US-A1- 2016 003 217

## Description

### TECHNICAL FIELD

The present invention relates to a wind turbine, in particular a vertical-axis wind turbine.

### PRIOR ART

US 2016/003217 A1, AU 3858278 A, WO 85/03981 A1, US 2010/090474 A1, WO 2007/105985 A1, and US 2015/118050 A1 disclose wind turbines.

Vertical-axis wind turbines generally have a support frame anchored to the ground, a shaft rotatably associated with the support frame according to a vertical rotation axis, a plurality of blades connected to the shaft and an electric generator mechanically connected to the shaft for transforming the rotation of the shaft due to the thrust of the wind on the blades into electrical energy. The blades are circumferentially arranged about the rotation axis so as to allow the wind turbine to capture winds coming from every direction without needing any orientation mechanisms, unlike what happens with horizontal-axis wind turbines.

A known problem of vertical-axis wind turbines is their lower efficiency with respect to horizontal-axis generators.

A cause of lower efficiency is to be attributed to the braking effect caused by the blades when they are positioned against the wind or when, having exceeded the angle of rotation of the shaft in which they pick up the thrust of the wind, have to advance, or rotate, in the opposite direction to that of the thrust of the wind.

Vertical-axis wind turbines are known, provided with blade orientation systems adapted to orient the blades so as to reduce such braking effect.

An object of the present invention is that of making available a vertical axis wind turbine provided with a blade orientation system, having greater efficiency with respect to devices of the prior art.

Such object is reached by the characteristics of the invention given in the independent claim. The dependent claim outlines preferred and/or particularly advantageous aspects of the invention.

### DISCLOSURE OF THE INVENTION

The invention, particularly, makes available a wind turbine apparatus according to claim 1.

An aspect of the disclosure envisages each blade comprising a portion which is proximal to the first edge, which radially overlaps a portion of the successive blade which is proximal to the second edge of said successive blade, when both the blades are in rest position.

In this way the blades that are in the rotation portion of the shaft in the contrary direction to the wind substantially form a shield that prevents the wind from infiltrating between said blades, thus reducing the braking effect.

According to a further aspect of the disclosure, between the first edge of the blade in the rest position and the second edge of the successive blade in rest position, there may be a radial gap.

This promotes the thrust of the wind on the blade in the rotation portion of the shaft in which the blades move in the same direction as the wind.

Preferably the gap can have an extension in the radial direction with respect to the rotation axis comprised between 0.2 and 0.4 times the distance between the hinge axis and the rotation axis.

Such values guarantee a sufficient flow of air that pushes against the blade to put the shaft into rotation.

Another aspect of the disclosure envisages that each blade can comprise a concave surface having a radius of curvature comprised between 0.6 and 1.3 times the distance between the rotation axis and the hinge axis.

Thanks to such solution the wind turbine is effective and at the same time cheap and simple to realise.

A further aspect of the disclosure envisages that the electric generator can be of the linear type.

In this way, with the same shaft rotation speed, it is possible to increase the amount of energy produced with respect to a conventional electric generator. Preferably the wind turbine can comprise a free wheel connected to the shaft adapted to prevent a rotation of the shaft in contrary direction with respect to the rotation direction.

This prevents the wind being able to put the shaft into rotation in the opposite direction to that for which the blades were designed and optimized.

According to the invention, the blades of the second wind turbine are configured to put the shaft into rotation about the rotation axis according to the opposite rotation direction with respect to the rotation direction of the first wind turbine; said second turbine being placed at a greater height with respect to the first turbine.

This makes it possible to counterbalance the centripetal forces exerted by the rotations of the shafts on the support frame, reducing the static and tiring strain that such frame must sustain and therefore reducing the wear of such component.

A further aspect of the invention envisages that the wind turbine apparatus according to claim 1 can comprise a third wind turbine placed at a higher height with respect to the first wind turbine and provided with: a shaft rotatably associated with the support frame of the first wind turbine according to the rotation axis, an electric generator mechanically connected to the shaft, a plurality of arms integral with the shaft, a plurality of monolithic blades configured to intercept the thrust of the wind so as to put into rotation the shaft about the rotation axis according to the rotation direction, each of which:
○ is hinged to a respective arm according to a hinge axis parallel to the rotation axis,
○ is delimited in the transverse direction to the hinge axis by a first edge, which is proximal to a successive blade of the plurality of blades with respect to the rotation direction T, and a second edge which is distal from said successive blade,
○ has a smaller extension in the parallel direction to the hinge axis with respect to the extension in the same direction as the blades of the second wind turbine 200.
○ rotates with respect to the hinge axis between a rest position, wherein the distance is minimum between the first edge and the hinge axis of the successive blade with respect to the rotation direction of the shaft, and an active position, wherein the distance is maximum between the first edge and the hinge axis of the successive blade with respect to the rotation direction of the shaft, and the first edge is placed at a greater radial distance from the rotation axis Z with respect to when the blade is in the first position;
said third wind turbine also comprises a plurality of elastic elements, each interposed between a blade and the corresponding arm and configured to exert a force on the respective blade which promotes the movement of said blade from the active position to the rest position.

This makes it possible to further increase the production efficiency of the electrical energy.

### BRIEF DESCRIPTION OF THE DRAWINGS

Further characteristics and advantages of the invention will become clear from reading the following description provided as a non-limiting example, with the help of the figures illustrated in the attached tables.
Figure 1 is an axonometric view of a first wind turbine.
Figure 2 is an axonometric view of the first generator of Figure 1 in a different operating position.
Figure 3 is a plan view of the first wind turbine of Figure 1.
Figure 4 is a partial section view of the first wind turbine of Figure 3 according to the plane IV-IV.
Figure 5 is an axonometric view of a second wind turbine.
Figure 6 is a lateral view of the second wind turbine of Figure 5.
Figure 7 is a plan view of the second wind turbine of Figures 5 and 6.
Figure 8 is a lateral view of a wind turbine apparatus according to the invention.
Figure 9 is a plan view of the wind turbine apparatus of Figure 8.

### BEST WAY TO ACTUATE THE INVENTION

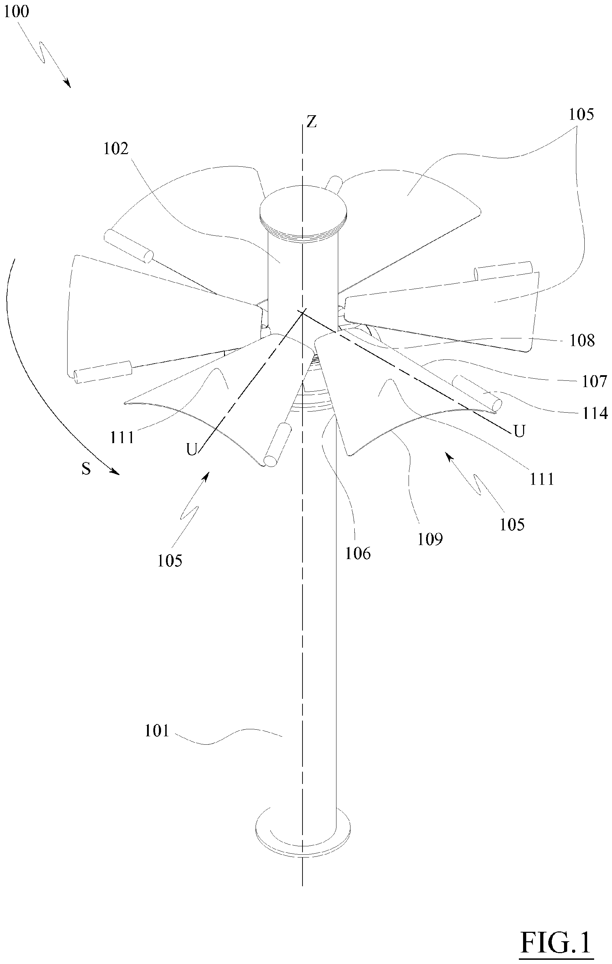

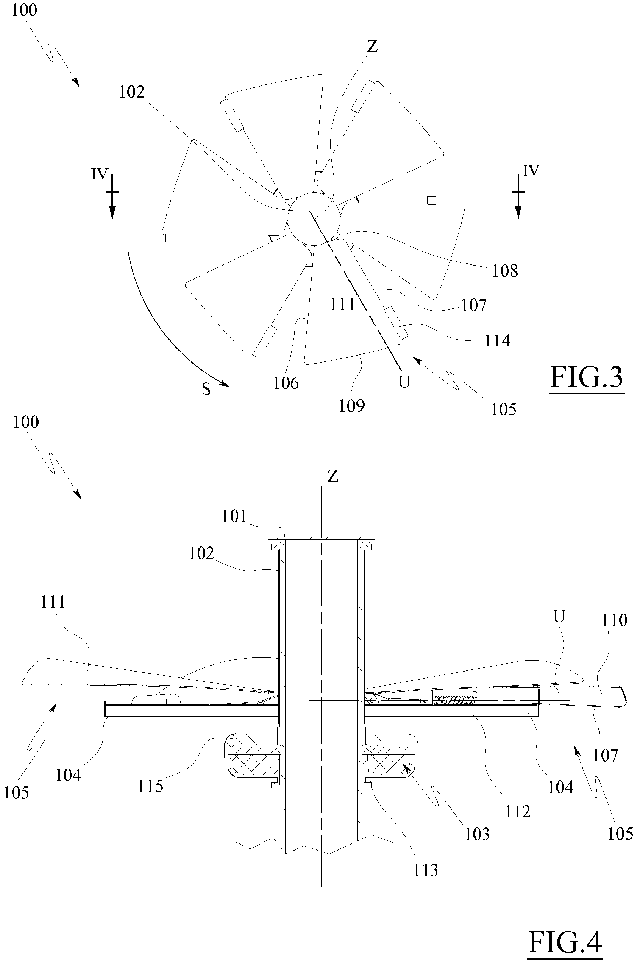

With particular reference to Figures 1-4, 100 indicates overall a first vertical-axis wind turbine provided with a support frame adapted to be anchored to the ground.

The support frame comprises, for example, a column 101 adapted to be anchored at one end thereof to the ground and arranged with its longitudinal axis vertically oriented.

Preferably the column 101 has an axially hollow cylindrical shape and a constant cross section along its entire axial extension.

The column 101 has an axial extension comprised between 3 m and 20 m. The first wind turbine 100 comprises a shaft 102 rotatably associated with the support frame, for example, with the column 101, according to a vertical rotation axis Z.

Preferably the shaft 102 is axially hollow and externally embraces at least one axial portion of the column 101.

The first wind turbine 100 comprises an electric generator 103 mechanically connected to the shaft 102.

For example, the electric generator 103 comprises a first portion, i.e. a stator, integral with the support frame and a second portion, i.e. a rotor, integral in rotation with the shaft.

Preferably, the electric generator 103 is of the rotary linear type, i.e. of the type in which the rotor is realized in a disc provided with a plurality of permanent magnets that rotates facing a corresponding disc provided with a plurality of windings and constituting the stator.

It is not excluded that in an alternative embodiment of the invention not illustrated in the figures, the first turbine 100 can envisage a plurality of alternators, e.g. of the conventional type, connected to the shaft 102 independently from each other.

The first turbine 100 comprises a plurality of arms 104 provided with an end integral with the shaft 102 and angularly equidistant from each other with respect to an angle having a vertex on the rotation axis Z.

Each arm 104 has a longitudinal axis lying on a perpendicular plane to the rotation axis Z, e.g. each arm 104 is substantially rectilinear and radially oriented with respect to the rotation axis Z.

The first turbine 100 also comprises a plurality of monolithic blades 105, each connected to a respective arm 104, configured to intercept the thrust of the wind and put into rotation the shaft 102 about the rotation axis Z according to a rotation direction S.

In particular, each blade 105 is hinged to the respective arm 104 according to a hinge axis U perpendicular to the rotation axis Z and lying on a substantially horizontal plane.

Each blade 105 is delimited in the transverse direction with respect to the hinge axis U by a first edge 106, which is proximal to a successive blade 105 of the plurality of blades 105 according to the rotation direction S, and a second edge 107 which is distal from said successive blade 105.

Preferably the first edge 106 and the second edge 107 of the first wind turbine 100 are rectilinear.

It is specified that in this document "successive blade" with respect to the rotation direction of the shaft means the blade that an observer situated in a reference system integral with the support frame sees pass at a subsequent moment of the rotation of the shaft about the rotation axis Z with respect to the blade considered.

Each blade 105 is further delimited in the direction of the hinge axis U by a third edge 108 proximal to the shaft 102 and a fourth edge 109 distal from the shaft 102, both incident on the first edge 106 and the second edge 107.

In the embodiment illustrated, the third edge 108 and the fourth edge 109 are rectilinear.

Furthermore, each blade 105 has a concave surface 110 adapted to intercept the wind, for example that extends from the first edge 106 to the second edge 107, preferably having a radius of curvature comprised between 0.35 and 0.6 times the extension of the blade 105 in the direction of the hinge axis U. Each blade 105 also has a convex surface 111 opposite the concave surface 110, for example that extends from the first edge 106 to the second edge 107. For example each blade 105 is shaped like a monolithic curved slab, preferably of a constant thickness, a face of which defines the concave surface 110.

In the preferred embodiment the curved plate is shaped in a plan view like a trapezium, whose smallest base is proximal to the shaft 102.

For example each blade 105 is hinged to the respective arm 104 in a zone of said blade 105 comprised between the second edge 107 and a straight line equidistant from the first edge 106 and from the second edge 107, lying on a lying plane of the blade.

Preferably, each blade 105 is hinged to the respective arm 104 in proximity to the second edge 107.

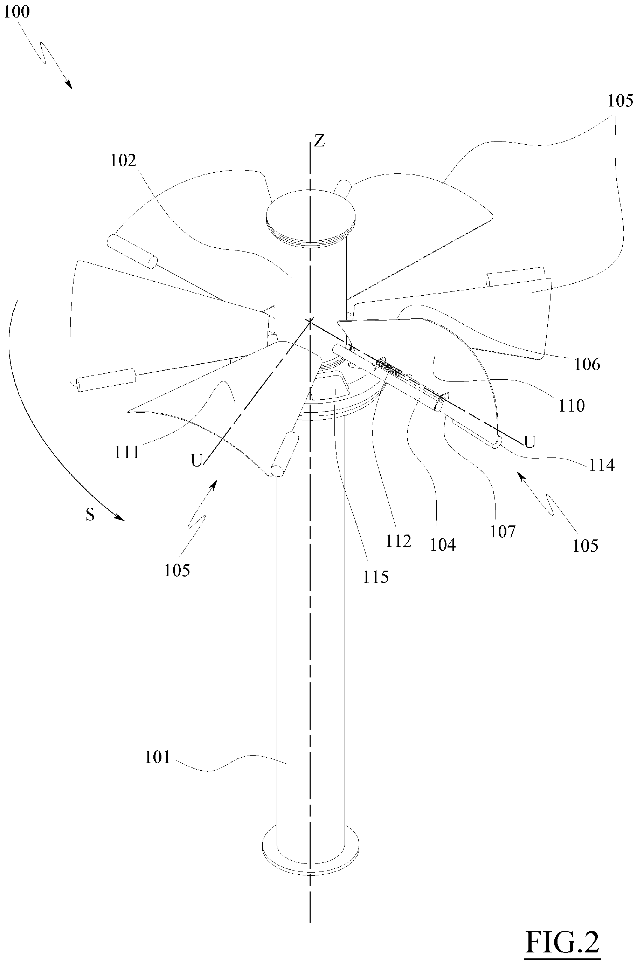

Each blade 105 rotates with respect to the hinge axis U between a rest position, wherein the distance is minimum between the first edge 106 and the hinge axis U of the successive blade with respect to the rotation direction S of the shaft 102, and an active position (see Figure 2), wherein the distance is maximum between the first edge 106 and the hinge axis U of the successive blade with respect to the rotation direction S of the shaft 102 and wherein the first edge 106 of the blade 105 is placed at a higher height with respect to the respective hinge axis U.

When the blade 105 is in the rest position the concave surface 110 is turned downwards overall.

Furthermore, when the blade 105 is in the rest position the first edge 106 is at a higher height with respect to the second edge 107 of the blade itself.

In particular, when the blade 105 is in the rest position the first edge 106 is at a higher height with respect to the hinge axis U.

When the blade 105 is in the active position the concave surface faces towards the successive blade 105.

In passing from the rest position to the active position each blade performs a rotation about the hinge axis U comprised between 40° and 70°.

Each blade 105 comprises a counterweight 114, e.g. positioned close to the second edge 107, adapted to promote the lifting of the blade 105 from the rest position to the active position.

The first wind turbine 100 comprises a first abutment element for each blade 105, which defines the rest position of the blade itself, i.e. preventing a rotation of the blade 105 with respect to the hinge axis U from the rest position in the opposite direction with respect to the active position.

The first wind turbine 100 also comprises a second abutment element for each blade 105, which defines the active position, i.e. preventing a rotation of the blade 105 with respect to the hinge axis U from the active position in the opposite direction with respect to the rest position.

In practice the first element and the second abutment element define the rotation extremes permitted to the corresponding blade 105 with respect to the hinge axis U.

The first wind turbine 100 comprises a plurality of elastic elements 112, each interposed between a blade 105 and the respective arm 104 and configured to exert a force on the respective blade 105 which promotes the movement of said blade from the active position to the rest position.

For example the first abutment element can comprise one of the elastic elements 112, which can be configured so that the sum of the moment provided by the weight of the blade, the moment provided by the weight of the counterweight and the moment generated by the elastic element itself is such as to maintain, in the absence of external forces, the blade 105 in the rest position. The first wind turbine 100 comprises a free wheel 113 connected to the support frame and to the shaft 102, adapted to prevent the shaft 102 rotating about the rotation axis Z in the opposite direction with respect to the rotation direction S. The first wind turbine 100 comprises a support element 115 integral with the shaft and provided with housings adapted to removably contain a plurality of weights in order to vary the flywheel mass of the first generator itself.

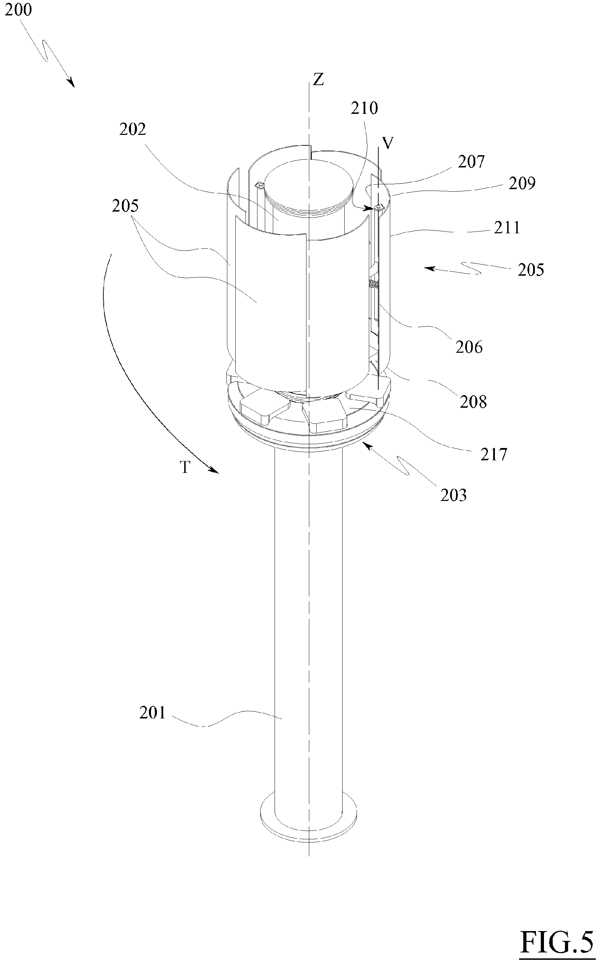

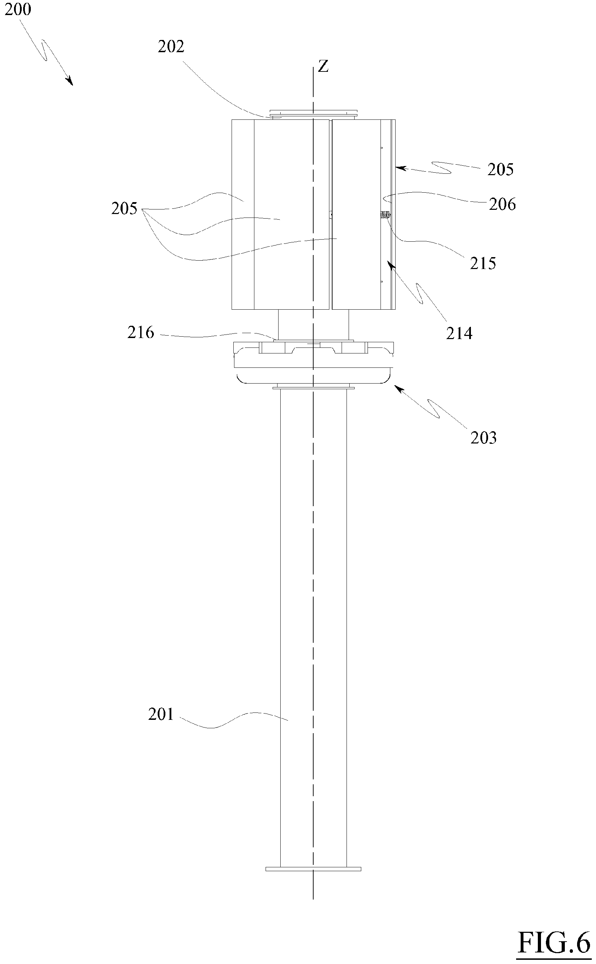

With particular reference to Figures 5-7, 200 indicates overall a second vertical-axis wind turbine provided with a support frame adapted to be anchored to the ground.

The support frame comprises, for example, a column 201 adapted to be anchored at one end thereof to the ground and arranged with its longitudinal axis vertically oriented.

Preferably the column 201 has an axially hollow cylindrical shape and a constant cross section along its entire axial extension.

The column 201 has an axial extension comprised between 3 m and 20 m. The second wind turbine 200 comprises a shaft 202 rotatably associated with the support frame, for example, with the column 201, according to a vertical rotation axis Z.

Preferably the shaft 202 is axially hollow and externally embraces at least one axial portion of the column 201.

The second wind turbine 200 comprises an electric generator 203 mechanically connected to the shaft 202.

For example, the electric generator 203 comprises a first portion, i.e. a stator, integral with the support frame and a second portion, i.e. a rotor, integral in rotation with the shaft.

Preferably, the electric generator 203 is of the rotary linear type, i.e. of the type in which the rotor is realized in a disc provided with a plurality of permanent magnets that rotates facing a corresponding disc provided with a plurality of windings and constituting the stator.

It is not excluded that in an alternative embodiment of the invention not illustrated in the figures, the second wind turbine 200 can envisage a plurality of alternators, e.g. of the conventional type, connected to the shaft 202 independently from each other.

The second wind turbine 200 comprises a plurality of arms 204 provided with an end integral with the shaft 202 and angularly equidistant from each other with respect to an angle having a vertex on the rotation axis Z.

Each arm 204 has a longitudinal axis lying on a perpendicular plane to the rotation axis Z, e.g. each arm 204 is substantially C-shaped with a concavity turned horizontally.

The second wind turbine 200 also comprises a plurality of monolithic blades 205, each connected to a respective arm 204, configured to intercept the thrust of the wind and put into rotation the shaft 202 about the rotation axis Z according to a rotation direction T.

In particular, each blade 205 is hinged to the respective arm 204 according to a hinge axis V parallel to the rotation axis Z.

Each arm 204 has concavities facing in the rotation direction T.

Each blade 205 is delimited in the transverse direction with respect to the hinge axis V by a first edge 206, which is proximal to a successive blade 205 of the plurality of blades 205 according to the rotation direction T, and a second edge 207 which is distal from said successive blade 205.

Preferably the first edge 206 and the second edge 207 of the second wind turbine 200 are rectilinear and parallel to each other.

Each blade 205 is further delimited in the direction of the hinge axis V by a third lower edge 208 and a fourth upper edge 209, both incident on the first edge 206 and the second edge 207.

In the embodiment illustrated, the third edge 208 and the fourth edge 209 are rectilinear and parallel.

Furthermore, each blade 205 has a concave surface 210 adapted to intercept the wind, for example that extends from the first edge 206 to the second edge 207, preferably having a radius of curvature comprised between 0.6 and 1.3 times the distance between the rotation axis Z and the hinge axis V.

Each blade 205 also has a convex surface 211 opposite the concave surface 210, for example that extends from the first edge 206 to the second edge 207. For example each blade 205 is shaped like a monolithic curved slab, preferably of a constant thickness, a face of which defines the concave surface 210.

In the preferred embodiment, each curved slab is obtained by bending a rectangular metal slab.

In particular, each blade 205 is shaped like a portion of a cylindrical tubular body, whose cross section is subtended at an angle at the centre having a vertex on the axis of the tubular body and magnitude less than 180°.

Each blade 205 is hinged to the respective arm 204 in a zone of said blade 205 comprised between the second edge 207 and a straight line equidistant from the first edge 206 and from the second edge 207, lying on a lying plane of the blade 205.

Preferably, each blade 205 is hinged to the respective arm 204 in proximity to the second edge 207.

Furthermore, each blade 205 is hinged to the respective arm 204 at the concave surface thereof 210, i.e. the concave surface faces towards the respective hinge axis V.

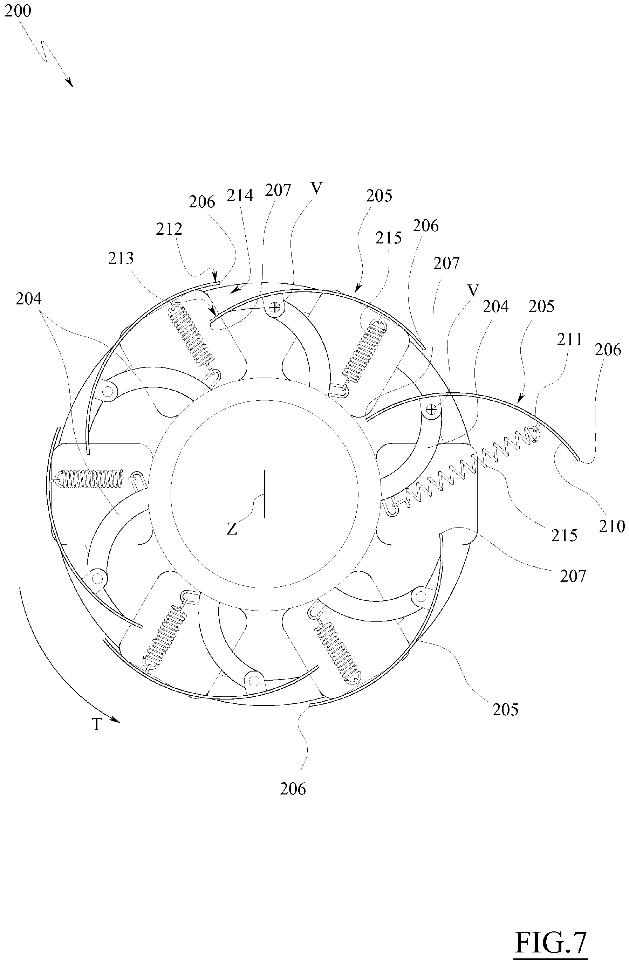

Each blade 205 rotates with respect to the hinge axis V between a rest position, wherein the distance is minimum between the first edge 206 and the hinge axis V of the successive blade with respect to the rotation direction T of the shaft 202, and an active position (see Figure 7), wherein the distance is maximum between the first edge 206 and the hinge axis T of the successive blade with respect to the rotation direction T of the shaft 202 and wherein the first edge 206 of the blade 205 is placed at a greater radial distance from the rotation axis Z with respect to when the blade is in the rest position. I.e. passing from the rest position to the active position, the blades that intercept the wind open radially outwards.

When the blade 205 is in the rest position the concave surface 210 is turned towards the shaft 202 overall.

Furthermore, when the blade 205 is in the rest position the first edge 206 is more radially external with respect to the second edge 207 of the blade itself. In practice, when the blade 205 is in the active position the concave surface 210 faces towards the successive blade 205.

In passing from the rest position to the active position each blade 205 performs a rotation about the hinge axis V comprised between 40° and 90°. Furthermore, when the blade 205 is in the rest position, the first edge 206 is placed at a greater distance from the rotation axis Z with respect to the distance between the hinge axis V and the rotation axis Z.

Each blade 205 has a first portion 212 proximal to the first edge 206 and a second portion 213 proximal to the second edge 207, therefore between two successive blades 205 in the rest position the first portion 212 of a blade radially overlaps, at least in part, with respect to the rotation axis Z with the second portion 213 of the successive blade 205.

In particular the first portion 212 is also more radially external with respect to the second portion 213.

It is specified that "radially overlaps with respect to the rotation axis Z" means that each point constituting the first portion 212 lies, together with a point constituting the second portion 213 of the successive blade 205, on a straight line passing through the rotation axis Z.

For example the first portion 212 and the second portion 213 each extend in the direction of a straight line perpendicular to the hinge axis V and passing through the first edge 206 and the second edge 207 by a quantity comprised between 0.5 and 1 times the distance between the first edge 206 and the second edge 207.

Preferably the first portion 212 and the second portion 213 each extend in a parallel direction to the hinge axis V from the third edge 208 to the fourth edge 209.

The second wind turbine comprises a gap 214 comprised between the first edge 206 and the second edge 207 of two successive blades in the rest position, i.e. between the first portion 212 and the second portion 213 of two successive blades in the rest position there is a gap 214.

For example, the gap 214 has an extension in the radial direction with respect to the axis Z comprised between 0.2 and 0.4 times the distance between the hinge axis V and the rotation axis Z, i.e. the distance between the first portion 212 and the second portion 213 is substantially comprised between 0.2 and 0.4 times the distance between the hinge axis V and the rotation axis Z.

Preferably the gap has a constant extension in the radial direction with respect to the axis Z along its entire extension in the parallel direction to the hinge axis V.

The second wind turbine 200 comprises a first abutment element for each blade 205, which defines the rest position of the blade itself, i.e. preventing a rotation of the blade 205 with respect to the hinge axis V from the rest position in the opposite direction with respect to the active position.

In practice, the first abutment element delimits the rotation of the blade 205 with respect to the hinge axis V so that the edge 206 of the blade 205 in the rest position is distanced from the edge 207 of the successive blade 205 in the rest position.

I.e. such first abutment element therefore defines the magnitude of the gap 214.

The second wind turbine 200 also comprises a second abutment element for each blade 205, which defines the active position, i.e. it prevents a rotation of the blade 205 beyond the predefined active position.

In practice the first element and the second abutment element define the rotation extremes about the hinge axis V permitted to the corresponding blade 205 with respect to the hinge axis V.

The second wind turbine 200 comprises a plurality of elastic elements 215, each interposed between a blade 205 and the respective arm 204 and configured to exert a force on the respective blade 205 which promotes the movement of said blade from the active position to the rest position.

The second wind turbine 200 comprises a free wheel 216 connected to the support frame and to the shaft 202, adapted to prevent the shaft 202 rotating about the rotation axis Z in the opposite direction with respect to the rotation direction S.

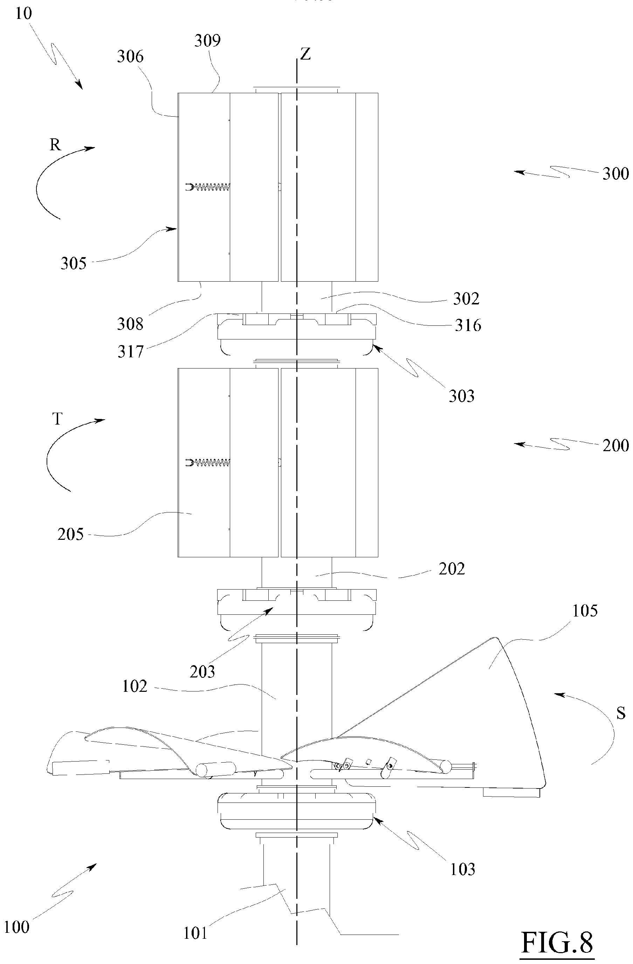

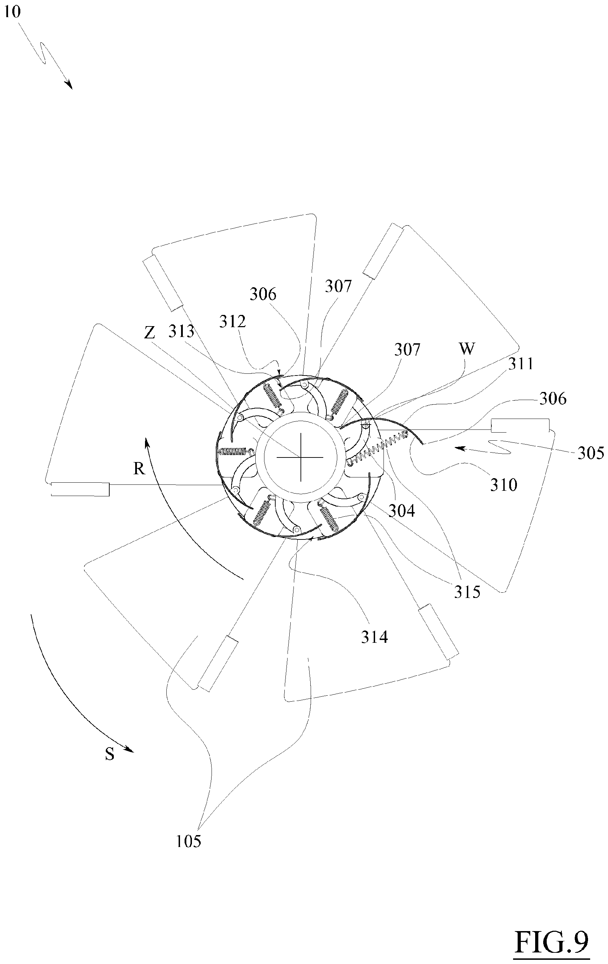

The second wind turbine 200 comprises a support element 217 integral with the shaft and provided with housings adapted to removably contain a plurality of weights in order to vary the flywheel mass of the second generator itself. With particular reference to Figures 8 and 9, number 10 indicates a wind turbine apparatus which comprises the first wind turbine 100 and the second wind turbine 200, wherein the first wind turbine 100 and the second wind turbine 200 are rotatably associated with respect to the axis Z with a single support frame, preferably independently from each other.

For example the shaft 102 of the first wind turbine 100 and the shaft 202 of the second wind turbine 200 are rotatably associated with the column 101 of the first wind turbine 100, preferably independently from each other.

The blades 205 of the second wind turbine 200 are configured to intercept the wind so that the rotation direction T is opposite the rotation direction S of the first wind turbine 100.

In this way it is possible to counterbalance, at least partially, the centripetal forces exerted by the two wind turbines on the support frame.

In the wind turbine apparatus 10 the second wind turbine 200 is positioned at a higher height with respect to the first wind turbine 100.

In this way it is possible to reduce the radial dimensions of the upper portion of the wind turbine apparatus 10.

Furthermore, in the wind turbine apparatus 10, the electric generator 103 of the first wind turbine 100 and the electric generator 203 of the second wind turbine 200 are independent from each other.

The wind turbine apparatus comprises a third wind turbine 300 provided with a shaft 302 rotatably associated with the load-bearing frame of the first wind turbine 100, and for example placed at a higher height with respect to the second wind turbine 200.

Preferably the shaft 302 is rotatably associated with the load-bearing frame of the first wind turbine 100 independently from the shaft 102 of the first wind turbine 100 and from the shaft 202 of the second wind turbine 200.

The third wind turbine 300 is substantially shaped like the second wind turbine 200.

The shaft 302 is, for example, axially hollow and externally embraces at least one axial portion of the column 101.

The third wind turbine 300 comprises an electric generator 303 mechanically connected to the shaft 302 and independent from the electric generators 103,203 of the first wind turbine 100 and of the second wind turbine 200.

For example, the electric generator 303 comprises a first portion, i.e. a stator, integral with the support frame and a second portion, i.e. a rotor, integral in rotation with the shaft.

Preferably, the electric generator 303 is of the rotary linear type, i.e. of the type in which the rotor is realized in a disc provided with a plurality of permanent magnets that rotates facing a corresponding disc provided with a plurality of windings and constituting the stator.

It is not excluded that in an alternative embodiment of the invention not illustrated in the figures, the third wind turbine 300 can envisage a plurality of generators, e.g. of the conventional type, connected to the shaft 302 independently from each other.

The third wind turbine 300 comprises a plurality of arms 304 provided with an end integral with the shaft 302 and angularly equidistant from each other with respect to an angle having a vertex on the rotation axis Z.

Each arm 304 has a longitudinal axis lying on a perpendicular plane to the rotation axis Z, e.g. each arm 304 is substantially C-shaped with a concavity turned horizontally.

For example the arms 304 of the third wind turbine 300 have the same radial extension with respect to the rotation axis Z of the arms 204 of the second wind turbine 200.

However, it is not excluded that the arms 304 of the third wind turbine 300 can have the same radial extension with respect to the smallest rotation axis Z with respect to the arms 204 of the second wind turbine 200.

The second wind turbine 300 also comprises a plurality of monolithic blades 305, each connected to a respective arm 304, configured to intercept the thrust of the wind and put into rotation the shaft 302 about the rotation axis Z according to a rotation direction R, for example concordant with the rotation direction T.

In particular, each blade 305 is hinged to the respective arm 304 according to a hinge axis W parallel to the rotation axis Z.

Each blade 305 is delimited in the transverse direction with respect to the hinge axis W by a first edge 306, which is proximal to a successive blade 305 of the plurality of blades 305 according to the rotation direction R, and a second edge 307 which is distal from said successive blade 305.

Preferably the first edge 306 and the second edge 307 of the third wind turbine 300 are rectilinear and parallel to each other.

For example, the blades 305 of the third wind turbine 300 have a smaller extension in a parallel direction to the hinge axis W with respect to the extension in the same direction of the blades 205 of the second wind turbine 200.

Each blade 305 is further delimited in the direction of the hinge axis W by a third edge 308 proximal to the shaft 302 and a fourth edge 309 distal from the shaft 302, both incident on the first edge 306 and the second edge 307.

In the embodiment illustrated, the third edge 308 and the fourth edge 309 are rectilinear and parallel.

Furthermore, each blade 305 has a concave surface 310 adapted to intercept the wind, for example that extends from the first edge 306 to the second edge 307, preferably having a radius of curvature comprised between 0.6 and 1.3 times the distance between the rotation axis Z and the hinge axis W.

Each blade 305 also has a convex surface 311 opposite the concave surface 310, for example that extends from the first edge 306 to the second edge 307. For example each blade 305 is shaped like a monolithic curved slab, preferably of a constant thickness, a face of which defines the concave surface 310.

In the preferred embodiment, each curved slab is obtained by bending a rectangular metal slab.

In particular, each blade 305 is shaped like a portion of a cylindrical tubular body, whose cross section is subtended at an angle at the centre having a vertex on the axis of the tubular body and magnitude less than 180°.

Each blade 305 is hinged to the respective arm 304 in a zone of said blade 305 comprised between the second edge 307 and a straight line equidistant from the first edge 306 and from the second edge 307, lying on a lying plane of the blade 305.

Preferably, each blade 305 is hinged to the respective arm 304 in proximity to the second edge 307.

Each blade 305 rotates with respect to the hinge axis W between a rest position, wherein the distance is minimum between the first edge 306 and the hinge axis W of the successive blade with respect to the rotation direction R of the shaft 302, and an active position, wherein the distance is maximum between the first edge 306 and the hinge axis W of the successive blade with respect to the rotation direction W of the shaft 302 and wherein the first edge 306 of the blade 305 is placed at a greater radial distance from the rotation axis Z with respect to when the blade is in the rest position. I.e. passing from the rest position to the active position, the blades that intercept the wind open radially outwards.

When the blade 305 is in the rest position the concave surface 310 is turned towards the shaft 302 overall.

Furthermore, when the blade 305 is in the rest position the first edge 306 is more radially external with respect to the second edge 307 of the blade itself. In practice, when the blade 305 is in the active position the concave surface faces towards the successive blade 305.

In passing from the rest position to the active position each blade 305 performs a rotation about the hinge axis W comprised between 40° and 90°. Furthermore, when the blade 305 is in the rest position, the first edge 306 is placed at a greater distance from the rotation axis Z with respect to the distance between the hinge axis V and the rotation axis Z.

Each blade 305 has a first portion 312 proximal to the first edge 306 and a second portion 313 proximal to the second edge 307, therefore between two successive blades 305 in the rest position the first portion 312 of a blade radially overlaps, at least in part, with respect to the rotation axis Z with the second portion 313 of the successive blade 305.

For example the first portion 312 and the second portion 313 each extend in the direction of a straight line passing through the first edge 306 and the second edge 307 by a quantity comprised between 0.4 and 0.6 times the distance between the first edge 306 and the second edge 307.

Preferably the first portion 312 and the second portion 313 each extend in a parallel direction to the hinge axis W from the third edge 308 to the fourth edge 309.

The second wind turbine comprises a gap 314 comprised between the first edge 306 and the second edge 307 of two successive blades in the rest position, i.e. between the first portion 312 and the second portion 313 of two successive blades in the rest position.

For example the gap 314 has an extension in the radial direction with respect to the axis Z comprised between 0.2 and 0.4 times the distance between the hinge axis W and the rotation axis Z.

Preferably the gap has a constant extension in the radial direction with respect to the axis Z along its entire extension in the parallel direction to the hinge axis W.

The third wind turbine 300 comprises a first abutment element for each blade 305, which defines the rest position of the blade itself, i.e. preventing a rotation of the blade 305 with respect to the hinge axis W from the rest position in the opposite direction with respect to the active position.

The third wind turbine 300 also comprises a second abutment element for each blade 305, which defines the active position, i.e. preventing a rotation of the blade 305 with respect to the hinge axis U from the active position in the opposite direction with respect to the rest position.

In practice the first element and the second abutment element define the rotation extremes permitted to the corresponding blade 305 with respect to the hinge axis W.

The third wind turbine 300 comprises a plurality of elastic elements 315, each interposed between a blade 305 and the respective arm 304 and configured to exert a force on the respective blade 305 which promotes the movement of said blade from the active position to the rest position.

The third wind turbine 300 comprises a free wheel 316 connected to the support frame and to the shaft 302, adapted to prevent the shaft 302 rotating about the rotation axis Z in the opposite direction with respect to the rotation direction R.

The third wind turbine 300 comprises a support element 317 integral with the shaft and provided with housings adapted to removably contain a plurality of weights in order to vary the flywheel mass of the third generator itself.

The wind turbine apparatus 10 is configured so that the centripetal force exerted by the first wind turbine 100 on the support frame is substantially counterbalanced by the centripetal forces exerted on the support frame by the second wind turbine 200 and by the third wind turbine 300.

The operation of the wind turbines and the wind turbine apparatus is as follows. In the case of the first wind turbine 100, when the wind, i.e. a flow of air, hits said first wind turbine 100, it pushes on the concave surface 110 of the blades 105, whose first edge 106 is indicatively turned in the direction from which the flow of air originates, putting the shaft 102 into rotation towards the rotation direction S.

By pushing on the concave surface 110 of said blades 105 having the first edge 106 turned in the direction from which the flow of air originates, the wind brings at least one blade 105 from the rest position to the active position beating the force exerted by the elastic element 112 and by the weight of the blade itself, also thanks to the counterweight 114, thus increasing the rotation speed of the shaft 102 and the amount of energy produced by the electric generator 103.

The elastic element 114, in the rotation step about the rotation axis Z in which the concave surface 110 is not hit by the wind, brings the blade 105 into the rest position. This reduces the braking effect of the blade in the step in which it moves in contrary direction to the wind thanks to the fact that the wind pushes on the convex surface and on a reduced surface area of the blade given that in the rest position the distance is minimum between the first edge and the hinge axis U of the successive blade.

Similarly, in the case of the second wind turbine 200, when the flow of air hits said second wind turbine 200, it pushes, channelled through the gap 214, on the concave surface 210 of the blades 205, whose first edge 206 is indicatively turned in the direction from which the flow of air originates, putting the shaft 202 into rotation towards the rotation direction T.

By pushing on the concave surface 210 of said blades having the first edge facing in the direction from which the flow of air originates, the wind brings at least one blade 210 from the rest position to the active position beating the force exerted by the elastic element 215 and opening the blade externally with respect to the hinge axis V.

This increases the shaft rotation speed 202 and the amount of energy produced by the electric generator 203.

With the rotation of the shaft 202, when the concave surface 210 is covered with respect to the air flow, the force of the elastic element brings the blade 205 into the rest position.

The operation of the wind turbine apparatus 10 is analogous to that of the individual generators which in this case are supported by a single shaft, thus limiting the dimensions, and each produces a separate electric current from that of the other turbines.

In practice, the materials used, as well as the contingent shapes and sizes, can be whatever according to the requirements.

## Claims

1. A wind turbine apparatus (10) comprising:
- a first wind turbine (100) provided with:
• a support frame (101),
• a shaft (102) rotatably associated with the support frame (101) according to a substantially vertical rotation axis (Z),
• an electric generator (103) mechanically connected to the shaft (102),
• a plurality of arms (104) integral with the shaft (102),
• a plurality of monolithic blades (105) configured to intercept the thrust of the wind so as to put the shaft (102) into rotation about the rotation axis (Z) according to a rotation direction (S), each of which:
∘ is hinged to a respective arm (104) according to a hinge axis (U) perpendicular to the rotation axis (Z),
∘ is delimited in direction transverse to the hinge axis (U) by a first edge (106), which is proximal to a successive blade (105) of the plurality of blades (105) with respect to the rotation direction (S), and a second edge (107) which is distal from said successive blade (105), and
∘ rotates with respect to the hinge axis (U) between a rest position, wherein the distance is minimum between the first edge (106) and the hinge axis (U) of the successive blade (105) with respect to the rotation direction (S) of the shaft (102), and an active position, wherein the distance is maximum between the first edge (106) and the hinge axis (U) of the successive blade (105) with respect to the rotation direction (S) of the shaft (102),
• a plurality of elastic elements (112), each interposed between a blade (105) and the corresponding arm (104) and configured to exert a force on the respective blade (105) which promotes the movement of said blade (105) from the active position to the rest position,
- a second wind turbine (200) comprising:
• a support frame (201),
• a shaft (202) rotatably associated with the support frame (101) of the first wind turbine (100) with respect to the vertical rotation axis (Z)
• an electric generator (203) mechanically connected to the shaft (202),
• a plurality of arms (204) integral with the shaft (202),
• a plurality of monolithic blades (205) configured to intercept the thrust of the wind so as to put the shaft (202) into rotation about the rotation axis (Z) according to a rotation direction (T), each of which:
∘ is hinged to a respective arm (204) according to a hinge axis (V) parallel to the rotation axis (Z),
∘ is delimited in direction transverse to the hinge axis (V) by a first edge (206), which is proximal to a successive blade (205) of the plurality of blades (205) with respect to the rotation direction (T), and a second edge (207) which is distal from said successive blade (205), and
∘ rotates with respect to the hinge axis (V) between a rest position, wherein the distance is minimum between the first edge (206) and the hinge axis (V) of the successive blade (205) with respect to the rotation direction (T) of the shaft (202), and an active position, wherein the distance is maximum between the first edge (206) and the hinge axis (V) of the successive blade (205) with respect to the rotation direction (T) of the shaft (202), and the first edge (206) is placed at a greater radial distance from the rotation axis (Z) with respect to when the blade (205) is in the rest position;
said second wind turbine (200) comprising also a plurality of elastic elements (215), each interposed between a blade (205) and the corresponding arm (204) and configured to exert a force on the respective blade (205) which promotes the movement of said blade (205) from the active position to the rest position, wherein the blades (205) of the second wind turbine (200) are configured to put the corresponding shaft (202) into rotation about the rotation axis (Z) according to the opposite rotation direction (T) with respect to the rotation direction (S) of the first wind turbine (100); said second turbine (200) being placed at a greater height with respect to the first turbine (100) and wherein the electric generator (103) of the first wind turbine (100) and the electric generator (203) of the second wind turbine (200) are independent from each other.

2. A wind turbine apparatus (10) according to claim 1, comprising a third wind turbine (300) placed at a greater height with respect to the first wind turbine (100) and provided with:
- a shaft (302) rotatably associated with the support frame (101) of the first wind turbine (100) according to the rotation axis (Z),
- an electric generator (303) mechanically connected to the shaft (302),
- a plurality of arms (304) integral with the shaft (302),
- a plurality of monolithic blades (305) configured to intercept the thrust of the wind so as to put the shaft into rotation about the rotation axis (Z) according to a rotation direction (R), each of which:
∘ is hinged to a respective arm (304) according to a hinge axis (W) parallel to the rotation axis (Z),
∘ is delimited in direction transverse to the hinge axis (W) by a first edge (306), which is proximal to a successive blade (305) of the plurality of blades (305) with respect to the rotation direction (R), and a second edge (307) which is distal from said successive blade (305), and
∘ has a smaller extension in direction parallel to the hinge axis (W) with respect to the extension in the same direction of the blades (205) of the second wind turbine (200),
∘ rotates with respect to the hinge axis (W) between a rest position, wherein the distance is minimum between the first edge (306) and the hinge axis (W) of the successive blade (305) with respect to the rotation direction (R) of the shaft (302), and an active position, wherein the distance is maximum between the first edge (306) and the hinge axis (W) of the successive blade (305) with respect to the rotation direction (R) of the shaft (302), and the first edge (306) is placed at a greater radial distance from the rotation axis (Z) with respect to when the blade (305) is in the rest position;
said third wind turbine (300) comprising also a plurality of elastic elements (315), each interposed between a blade (305) and the corresponding arm (304) and configured to exert a force on the respective blade (305) which promotes the movement of said blade (305) from the active position to the rest position.

## Patentansprüche

1. Windturbinenvorrichtung (10), Folgendes umfassend:
- eine erste Windturbine (100), die mit Folgendem ausgestattet ist:
• einem Stützrahmen (101),
• einer Welle (102), die gemäß einer im Wesentlichen vertikalen Drehachse (Z) drehbar mit dem Stützrahmen (101) verbunden ist,
• einem Stromgenerator (103), der mechanisch an die Welle (102) gekoppelt ist,
• mehreren Armen (104), die in die Welle (102) integriert sind,
• mehreren einstückigen Blättern (105), die dafür gestaltet sind, die Schubkraft des Windes derart einzufangen, dass die Welle (102) gemäß einer Drehrichtung (S) in Drehung um die Drehachse (Z) versetzt wird, wobei jedes von ihnen:
○ gemäß einer Schwenkachse (U) senkrecht zur Drehachse (Z) an einen entsprechenden Arm (104) angelenkt ist,
○ in einer Richtung quer zur Schwenkachse (U) durch einen ersten Rand (106) begrenzt ist, der im Verhältnis zur Drehrichtung (S) nahe einem folgenden Blatt (105) der mehreren Blätter (105) liegt, und einen zweiten Rand (107), der entfernt vom folgenden Blatt (105) liegt, und
○ sich im Verhältnis zur Schwenkachse (U) zwischen einer Ruheposition, in welcher der Abstand zwischen dem ersten Rand (106) und der Schwenkachse (U) des folgenden Blattes (105) im Verhältnis zur Drehrichtung (S) der Welle (102) minimal ist, und einer Aktivposition dreht, in welcher der Abstand zwischen dem ersten Rand (106) und der Schwenkachse (U) des folgenden Blattes (105) im Verhältnis zur Drehrichtung (S) der Welle (102) maximal ist,
• mehreren elastischen Elementen (112), jedes zwischen einem Blatt (105) und dem entsprechenden Arm (104) eingesetzt und dafür gestaltet, eine Kraft auf das entsprechende Blatt (105) auszuüben, welche die Bewegung des Blattes (105) von der Aktivposition in die Ruheposition fördert,
- eine zweite Windturbine (200), Folgendes umfassend:
• einen Stützrahmen (201),
• eine Welle (202), die im Verhältnis zur vertikalen Drehachse (Z) drehbar mit dem Stützrahmen (101) der ersten Windturbine (100) verbunden ist,
• einen Stromgenerator (203), der mechanisch an die Welle (202) gekoppelt ist,
• mehrere Arme (204), die in die Welle (202) integriert sind,
• mehrere einstückige Blätter (205), die dafür gestaltet sind, die Schubkraft des Windes derart einzufangen, dass die Welle (202) gemäß einer Drehrichtung (T) in Drehung um die Drehachse (Z) versetzt wird, wobei jedes von ihnen:
○ gemäß einer Schwenkachse (V) parallel zur Drehachse (Z) an einen entsprechenden Arm (204) angelenkt ist,
○ in einer Richtung quer zur Schwenkachse (V) durch einen ersten Rand (206) begrenzt ist, der im Verhältnis zur Drehrichtung (T) nahe einem folgenden Blatt (205) der mehreren Blätter (205) liegt, und einen zweiten Rand (207), der entfernt vom folgenden Blatt (205) liegt, und
○ sich im Verhältnis zur Schwenkachse (V) zwischen einer Ruheposition, in welcher der Abstand zwischen dem ersten Rand (206) und der Schwenkachse (V) des folgenden Blattes (205) im Verhältnis zur Drehrichtung (T) der Welle (202) minimal ist, und einer Aktivposition dreht, in welcher der Abstand zwischen dem ersten Rand (206) und der Schwenkachse (V) des folgenden Blattes (205) im Verhältnis zur Drehrichtung (T) der Welle (202) maximal ist und der erste Rand (206) in einem größeren radialen Abstand zur Drehachse (Z) platziert ist als wenn sich das Blatt (205) in der Ruheposition befindet,
wobei die zweite Windturbine (200) ebenfalls mehrere elastische Elemente (215) umfasst, jedes zwischen einem Blatt (205) und dem entsprechenden Arm (204) eingesetzt und dafür gestaltet, eine Kraft auf das entsprechende Blatt (205) auszuüben, welche die Bewegung des Blattes (205) von der Aktivposition in die Ruheposition fördert,
wobei die Blätter (205) der zweiten Windturbine (200) dafür gestaltet sind, die entsprechende Welle (202) gemäß der zur Drehrichtung (S) der ersten Windturbine entgegengesetzten Drehrichtung (T) in Drehung um die Drehachse (Z) zu versetzen, wobei die zweite Turbine (200) im Verhältnis zur ersten Turbine (100) höher platziert ist,
und wobei der Stromgenerator (103) der ersten Windturbine (100) und der Stromgenerator (203) der zweiten Windturbine (200) unabhängig voneinander sind.

2. Windturbinenvorrichtung (10) nach Anspruch 1, eine dritte Windturbine (300) umfassend, die im Verhältnis zur ersten Windturbine (100) höher platziert ist und mit Folgendem ausgestattet ist:
• einer Welle (302), die gemäß der Drehachse (Z) drehbar mit dem Stützrahmen (101) der ersten Windturbine (100) verbunden ist,
• einem Stromgenerator (303), der mechanisch an die Welle (302) gekoppelt ist,
• mehreren Armen (304), die in die Welle (302) integriert sind,
• mehreren einstückigen Blättern (305), die dafür gestaltet sind, die Schubkraft des Windes derart einzufangen, dass die Welle gemäß einer Drehrichtung (R) in Drehung um die Drehachse (Z) versetzt wird, wobei jedes von ihnen:
○ gemäß einer Schwenkachse (W) parallel zur Drehachse (Z) an einen entsprechenden Arm (304) angelenkt ist,
○ in einer Richtung quer zur Schwenkachse (W) durch einen ersten Rand (306) begrenzt ist, der im Verhältnis zur Drehrichtung (R) nahe einem folgenden Blatt (305) der mehreren Blätter (305) liegt, und einen zweiten Rand (307), der entfernt vom folgenden Blatt (505) liegt, und
○ in Richtung parallel zur Schwenkachse (W) im Verhältnis zum Ausmaß der Blätter (205) der zweiten Windturbine (200) in der gleichen Richtung ein kleineres Ausmaß aufweist,
○ sich im Verhältnis zur Schwenkachse (W) zwischen einer Ruheposition, in welcher der Abstand zwischen dem ersten Rand (306) und der Schwenkachse (W) des folgenden Blattes (305) im Verhältnis zur Drehrichtung (R) der Welle (302) minimal ist, und einer Aktivposition dreht, in welcher der Abstand zwischen dem ersten Rand (306) und der Schwenkachse (W) des folgenden Blattes (305) im Verhältnis zur Drehrichtung (R) der Welle (302) maximal ist, und wobei der erste Rand (306) in größerem radialen Abstand zur Drehachse (Z) platziert ist als wenn sich das Blatt (305) in der Ruheposition befindet,
wobei die dritte Windturbine (23) ebenfalls mehrere elastische Elemente (315) umfasst, jedes zwischen einem Blatt (305) und dem entsprechenden Arm (304) eingesetzt und dafür gestaltet, eine Kraft auf das entsprechende Blatt (305) auszuüben, welche die Bewegung des Blattes (305) von der Aktivposition in die Ruheposition fördert.

## Revendications

1. Appareil à turbine éolienne (10) comprenant :
- une première turbine éolienne (100) dotée des éléments suivants :
• un cadre de support (101),
• un arbre (102) associé de manière rotative au cadre de support (101) selon un axe de rotation (Z) sensiblement vertical,
• un générateur électrique (103) mécaniquement connecté à l'arbre (102),
• une pluralité de bras (104) intégrés à l'arbre (102),
• une pluralité de lames monolithiques (105) configurées pour intercepter la poussée du vent afin que l'arbre (102) soit en rotation autour de l'axe de rotation (Z) selon une direction de rotation (S), chacune d'entre elles :
○ est articulée sur un bras (104) respectif selon un axe d'articulation (U) perpendiculaire à l'axe de rotation (Z),
○ est délimitée dans une direction transversale à l'axe d'articulation (U) par une première extrémité (106), qui est proche d'une lame (105) consécutive de la pluralité de lames (105) par rapport à la direction de rotation (S), et une seconde extrémité (107) qui est à distance de ladite lame (105) consécutive, et
○ tourne par rapport à l'axe d'articulation (U) entre une position de repos, dans laquelle la distance est minimale entre la première extrémité (106) et l'axe d'articulation (U) de la lame (105) consécutive par rapport à la direction de rotation (S) de l'arbre (102), et une position active, dans laquelle la distance est maximale entre la première extrémité (106) et l'axe d'articulation (U) de la lame (105) consécutive par rapport à la direction de rotation (S) de l'arbre (102),
• une pluralité d'éléments élastiques (112), chacun interposé entre une lame (105) et le bras (104) correspondant et configuré pour exercer une force sur la lame (105) respective qui facilite le mouvement de ladite lame (105) de la position active à la position de repos,
- une deuxième turbine éolienne (200) comprenant :
• un cadre de support (201),
• un arbre (202) associé de manière rotative au cadre de support (101) de la première turbine éolienne (100) par rapport à l'axe de rotation (Z) vertical,
• un générateur électrique (203) mécaniquement connecté à l'arbre (202),
• une pluralité de bras (204) intégrés à l'arbre (202),
• une pluralité de lames monolithiques (205) configurées pour intercepter la poussée du vent afin que l'arbre (202) soit en rotation autour de l'axe de rotation (Z) selon une direction de rotation (T), chacune d'entre elles :
○ est articulée sur un bras (204) respectif selon un axe d'articulation (V) parallèle à l'axe de rotation (Z),
○ est délimitée dans une direction transversale à l'axe d'articulation (V) par une première extrémité (206), qui est proche d'une lame (205) consécutive de la pluralité de lames (205) par rapport à la direction de rotation (T), et une seconde extrémité (207) qui est à distance de ladite lame (205) consécutive, et
○ tourne par rapport à l'axe d'articulation (V) entre une position de repos, dans laquelle la distance est minimale entre la première extrémité (206) et l'axe d'articulation (V) de la lame (205) consécutive par rapport à la direction de rotation (T) de l'arbre (202), et une position active, dans laquelle la distance est maximale entre la première extrémité (206) et l'axe d'articulation (V) de la lame (205) consécutive par rapport à la direction de rotation (T) de l'arbre (202), et la première extrémité (206) est placée à une distance radiale supérieure de l'axe de rotation (Z) par rapport au moment où la lame (205) est dans la position de repos ;
ladite deuxième turbine éolienne (200) comprenant également une pluralité d'éléments élastiques (215), chacun interposé entre une lame (205) et le bras (204) correspondant et configuré pour exercer une force sur la lame (205) respective qui facilite le mouvement de ladite lame (205) de la position active à la position de repos, dans lequel les lames (205) de la deuxième turbine éolienne (200) sont configurées pour mettre l'arbre (202) correspondant en rotation autour de l'axe de rotation (Z) selon la direction de rotation opposée (T) par rapport à la direction de rotation (S) de la première turbine éolienne (100) ; ladite deuxième turbine (200) étant placée à une hauteur supérieure par rapport à la première turbine (100)
et dans lequel le générateur électrique (103) de la première turbine éolienne (100) et le générateur électrique (203) de la deuxième turbine éolienne (200) sont indépendant l'un de l'autre.

2. Appareil à turbine éolienne (10) selon la revendication 1, comprenant une troisième turbine éolienne (300) placée à une hauteur supérieure par rapport à la première turbine éolienne (100) et dotée des éléments suivants :
- un arbre (302) associé de manière rotative au cadre de support (101) de la première turbine éolienne (100) selon l'axe de rotation (Z),
- un générateur électrique (303) mécaniquement connecté à l'arbre (302),
- une pluralité de bras (304) intégrés à l'arbre (302),
- une pluralité de lames monolithiques (305) configurées pour intercepter la poussée du vent afin que l'arbre soit en rotation autour de l'axe de rotation (Z) selon une direction de rotation (R), chacune d'entre elles :
○ est articulée sur un bras (304) respectif selon un axe d'articulation (W) parallèle à l'axe de rotation (Z),
○ est délimitée dans une direction transversale à l'axe d'articulation (W) par une première extrémité (306), qui est proche d'une lame (305) consécutive de la pluralité de lames (305) par rapport à la direction de rotation (R), et une seconde extrémité (307) qui est à distance de ladite lame (305) consécutive, et
○ possède une plus petite extension dans une direction parallèle à l'axe d'articulation (W) par rapport à l'extension dans la même direction des lames (205) de la deuxième turbine éolienne (200),
○ tourne par rapport à l'axe d'articulation (W) entre une position de repos, dans laquelle la distance est minimale entre la première extrémité (306) et l'axe d'articulation (W) de la lame (305) consécutive par rapport à la direction de rotation (R) de l'arbre (302), et une position active, dans laquelle la distance est maximale entre la première extrémité (306) et l'axe d'articulation (W) de la lame (305) consécutive par rapport à la direction de rotation (R) de l'arbre (302), et la première extrémité (306) est placée à une distance radiale supérieure de l'axe de rotation (Z) par rapport au moment où la lame (305) est dans la position de repos ;
ladite troisième turbine éolienne (300) comprenant également une pluralité d'éléments élastiques (315), chacun interposé entre une lame (305) et le bras (304) correspondant et configuré pour exercer une force sur la lame (305) respective qui facilite le mouvement de ladite lame (305) de la position active à la position de repos.
